# EUROPÄISCHE PATENTANMELDUNG

(11) **EP 1 762 420 A2**
(43) Veröffentlichungstag der Anmeldung: **14.03.2007**
(21) Anmeldenummer: 06018824.0
(22) Anmeldetag: 08.09.2006
(51) Int. Cl.: B60K 37/02, B60R 11/02, G01C 21/00, G01C 21/20, G01C 21/36

(54) **Navigationseinrichtung**

(30) Priorität: 09.09.2005 DE 102005043863
(71) Anmelder: Bury Sp.z.o.o, 39 300 Mielec (PL)
(72) Erfinder: Piekarz, Roman, 39 300 Mielec (PL)
(74) Vertreter: Lins, Edgar

(57) **Zusammenfassung**

Bei einer Navigationseinrichtung mit einem Navigationsgerät (12) zur Auswertung von Satelliten-Navigationsdaten, Eingabe eines Navigationsziels und Ausgabe einer Route zum Navigationsziel, mit einem ein Display (14) aufweisenden Gehäuse (13), das auf einem Fußteil (1) lösbar befestigbar ist, lässt sich eine wesentliche Vereinfachung des Aufbaus und eine verbesserte Handhabung dadurch erreichen, dass das Fußteil (1) ein vorzugsweise tellerförmiges Basisteil (2) aufweist, auf dessen Oberseite ein einen Kreisbogenabschnitt bildendes erstes Führungselement (6) zur Aufnahme eines entsprechenden kreisbogenförmigen zweiten Führungselements (18) des Gehäuses (13) angeordnet ist und dass das Gehäuse (13) in der durch die Führungselemente gebildeten Führung in mehreren Winkelstellungen mit einer Rastanordnung federnd verrastbar ist.

## Beschreibung

Die Erfindung betrifft eine Navigationseinrichtung mit einem Navigationsgerät zur Auswertung von Satelliten-Navigationsdaten, Eingabe eines Navigationsziels und Ausgabe einer Route zum Navigationsziel, mit einem ein Display aufweisenden Gehäuse, das auf einem Fußteil lösbar befestigbar ist.

Derartige Navigationseinrichtungen sind bekannt und werden vornehmlich zur Navigation in einem Kraftfahrzeug verwendet. Insbesondere zur Diebstahlsicherung ist es bekannt, das Navigationsgerät auf einem Fußteil lösbar zu befestigen, sodass es unproblematisch mitgenommen werden kann, wenn das Kraftfahrzeug verlassen wird. Die lösbare Verbindung ist auch dann von Vorteil, wenn das Navigationsgerät, beispielsweise zum Aufspielen einer neuen digitalen Karte, mit einem Datenverarbeitungsgerät verbunden werden soll. Die bekannten Navigationsgeräte dieser Art sind über elektrische Kontakte mit dem Fußteil verbunden, da das Fußteil seinerseits die Verbindung mit einer Freisprechanlage des Kraftfahrzeugs herstellt, sodass eine Sprachausgabe des Navigationsgeräts über die im Kraftfahrzeug befindlichen Lautsprecher erfolgen kann. Ferner ist es möglich, eine am Kraftfahrzeug angebrachte Empfangsantenne für die Satellitendaten (beispielsweise GPS-Antenne; GPS-Gobal Positioning System) zu verbinden. Nachteilig an diesen Anordnungen ist ein vergleichsweise hoher Aufwand für das Fußteil.

Der vorliegenden Erfindung liegt daher die Aufgabe zugrunde, die Navigationseinrichtung der eingangs erwähnten Art so auszubilden, dass sie sich mit wenig Aufwand erstellen und vorteilhaft handhaben lässt.

Zur Lösung dieser Aufgabe ist erfindungsgemäß eine Navigationseinrichtung der eingangs erwähnten Art dadurch gekennzeichnet, dass das Fußteil ein Basisteil aufweist, auf dessen Oberseite ein einen Kreisbogenabschnitt bildendes erstes Führungselement zur Aufnahme eines entsprechenden kreisbogenförmigen zweiten Führungselements des Gehäuses angeordnet ist und dass das Gehäuse in der durch die Führungselemente gebildeten Führung in mehreren Winkelstellungen mit einer Rastanordnung federnd verrastbar ist.

Die erfindungsgemäße Navigationseinrichtung erlaubt die außerordentlich einfache Ausbildung des Fußteils, wobei dennoch die Winkeleinstellung des Gehäuses des Navigationsgeräts relativ zum Fußteil möglich ist, was insbesondere in einem Kraftfahrzeug aufgrund der unterschiedlichen Sitzgröße verschiedener Fahrer wesentlich ist. Im Unterschied zu bekannten Lösungen wird auf aufwändige Kugelgelenke o. ä. verzichtet.

Das Basisteil des Fußteils kann vorzugsweise flexibel ausgebildet sein, sodass sich das Fußteil an Krümmungen der Oberseite des Armaturenbretts anpassen kann, um dort verklebt oder beispielsweise mit Klettverbindungen lösbar befestigt zu werden.

Das Basisteil kann ferner tellerförmig ausgebildet sein, um eine relativ großflächige Befestigung mit seiner Unterseite, die als Klebfläche oder als Teil einer Klettverbindung ausgebildet sein kann, zu ermöglichen. Alternativ kann das Basisteil auch nach Art eines Saugnapfes, beispielsweise an einer Fensterscheibe eines Fahrzeugs, befestigbar sein.

Die Führungselemente können in einfacher Weise durch seitlich offene Nuten und in die Nuten eingreifende Stege gebildet sein, wobei beispielsweise das Fußteil mit den Stegen und das Gehäuse mit den Nuten versehen sein kann. Hierzu kann das Gehäuse einen entsprechenden Ansatz aufweisen.

Für die federnde Verrastung ist zweckmäßigerweise ein Federelement zwischen zwei Nuten oder zwei Stegen angeordnet, wobei sich an dem Federelement Vorsprünge befinden können, die zur Verrastung in mehrere entsprechende Ausnehmungen des Gegenparts eingreifen können. Befindet sich das Federelement, in einer bevorzugten Ausführungsform, an dem Fußteil, wird somit das Gehäuse die Ausnehmungen auf einer Kreisbogenbahn aufweisen, in die die Vorsprünge des Federelements zur Verrastung in mehreren Winkelstellungen eingreifen können.

Das Federelement kann in an sich bekannter Weise mittels eines abstehenden Endes in eine Entarretierungsrichtung bewegbar sein, wobei das abstehende Ende vorzugsweise zur Gehäuserückseite absteht, um den ästhetischen Eindruck der Navigationseinrichtung nicht zu stören. Dennoch kann in einfacher Weise die Entarretierung und damit die Entnahme des Navigationsgeräts vorgenommen werden.

In einer besonders bevorzugten Ausführungsform der Erfindung hat das Fußteil keine elektrische Funktion für das Navigationsgerät, sodass das Navigationsgerät autark vom Fußteil verwendbar ausgebildet ist. Dadurch ist eine aufwändige Kontaktanordnung zwischen Fußteil und dem Navigationsgerät nicht erforderlich. Allerdings kann das Fußteil in einer Variante dieser Ausführungsform mit einer in das Basisteil eingearbeitete TMC-Antenne (TMC = Traffic Message Channel) aufweisen, da es nicht unproblematisch ist, eine derartige Antenne in wirksamer Weise in dem vergleichsweise kleinen Gehäuse des Navigationsgeräts unterzubringen. In diesem Fall kann eine leitende Verbindung von der TMC-Antenne zu dem Navigationsgerät über einen auf einer Kontaktbahn geführten Schleifkontakt erfolgen, der federbelastet auf der Kontaktbahn geführt wird, wenn die Winkelstellung des Gehäuses gegenüber dem Fußteil verändert wird. Auch in dieser Ausführungsform ist eine aufwändige Kontaktanordnung der bisherigen Navigationseinrichtungen nicht erforderlich.

Das Navigationsgerät ist somit mit einer eigenen Satellitenantenne ausgerüstet und weist vorzugsweise auch eine eigene Stromversorgung in Form eines aufladbaren Akkumulators auf. Die Aufladung des Akkumulators kann zweckmäßigerweise mit einem Aufladekabel erfolgen, das einerseits an das Navigationsgerät und andererseits an einen Zigarettenanzünderanschluss des Kraftfahrzeugs anschließbar ist.

Das Führungselement auf dem Fußteil ist vorzugsweise als ein separates Bauteil ausgebildet, das vorzugsweise drehbar in dem Basisteil des Fußteils gelagert ist. Dadurch ist es möglich, nicht nur die Winkelstellung des Gehäuses, eine im Wesentlichen horizontale Achse einzustellen, sondern auch eine Drehung um eine im Wesentlichen vertikale Achse vorzunehmen. Dadurch wird die Einstellbarkeit erreicht, für die bisher eine aufwändige Kugelgelenkanordnung erforderlich war.

Die Erfindung soll im Folgenden anhand eines in der Zeichnung dargestellten Ausführungsbeispiels näher erläutert werden. Es zeigen:
- Figur 1: eine schematische perspektivische Darstellung eines Navigationsgeräts und eines Fußteils im nicht montierten Zustand des Navigationsgeräts;
- Figur 2: eine vergrößerte Darstellung der Führungselemente des Gehäuses des Navigationsgeräts und des Fußteils;
- Figur 3: eine explodierte Darstellung des Fußteils mit einem separaten Bauteil, dass das Führungselement des Fußteils und ein Federelement aufweist;
- Figur 4: eine Draufsicht auf das Fußteil;
- Figur 5: eine Ansicht der Unterseite des Navigationsgeräts mit dem mit dem Fußteil zusammenwirkenden Ansatz;
- Figur 6: eine Draufsicht auf das auf das Fußteil montierte Navigationsgerät;
- Figur 7: eine Draufsicht gemäß Figur 6 mit einer Darstellung der Führungs- und Arretierungsvorrichtung des Fußteils.

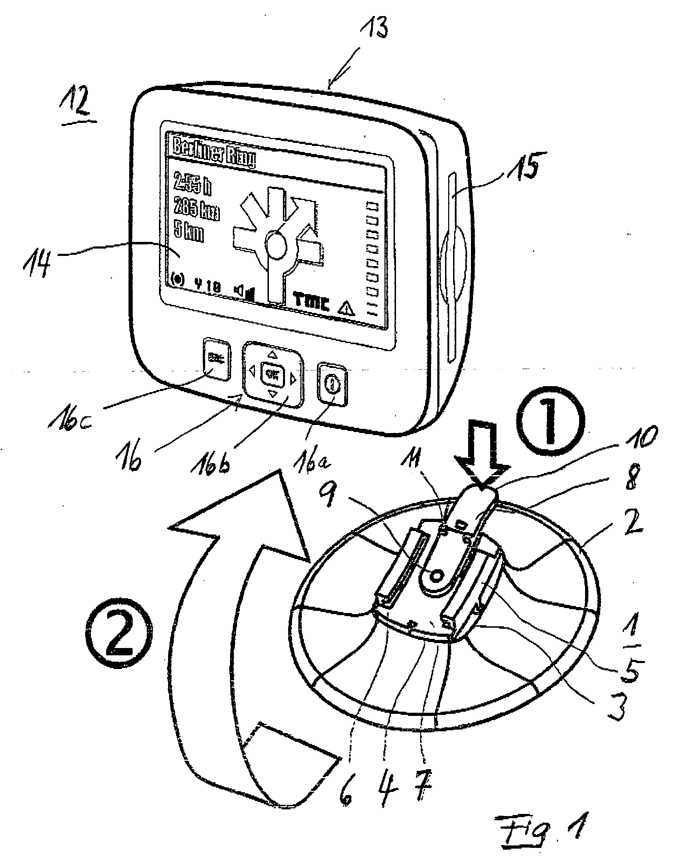

Figur 1 zeigt ein Fußteil 1, das aus einem tellerförmigen Basisteil 2 aus einem flexiblen, vorzugsweise gummiähnlichen Material besteht. Das Basisteil 2 ist mittig mit einer Erhöhung geformt, auf der sich eine schräg gestellte Montagefläche 3 befindet. Auf der Montagefläche 3 ist ein separates Bauteil 4 befestigt, das einen im Wesentlichen rechteckigen Grundriss aufweist und an zwei einander gegenüberliegenden längeren Seiten mit je einer Wand 5 versehen ist, von der ein horizontaler Steg 6 so absteht, dass die beiden Stege 6 zueinander zeigen und mit Abstand vom Boden 7 des Bauteils 4 angeordnet sind.

Zwischen den beiden Stegen 6 ist mittig ein Federelement 8 angeordnet, das mit einem Niet 9 o. dgl. mit dem Bauteil 4 bzw. dem Basisteil 2 verbunden ist. Das Federelement 8 ragt über das Bauteil 4 hinaus und ist so geformt, dass es durch Druck auf das freie, über das Bauteil 4 ragende Ende 10 nach unten drückbar ist. Das Federelement 8 weist etwa mittig an seiner Oberseite zwei nebeneinander angeordnete Vorsprünge 11 als Rastnocken auf.

Auf das Fußteil 1 ist ein Navigationsgerät 12 aufsetzbar, das in einem Gehäuse 13 untergebracht ist und an seiner Vorderseite ein großflächiges Display 14 aufweist. Das Gehäuse 13 lässt an einer Seitenwand einen Schlitz 15 zur Aufnahme einer Speicherkarte erkennen, auf der insbesondere eine oder mehrere digitale Karten gespeichert sind.

Unterhalb des Displays sind auf der Vorderseite Bedientasten 16 angeordnet, von denen eine Taste 16a zum Ein- und Ausschalten des Navigationsgeräts 12, eine mittlere Taste 16b als Cursor-Steuertaste und eine Taste 16c als Abbruchtaste (ESC) ausgebildet ist.

Figur 1 verdeutlicht mit einem Pfeil ①, dass durch Drücken auf das hintere Ende 10 des Federelements 8 das Gehäuse 13 von dem Fußteil 1 entarretierbar ist und dann durch Schwenken aus der durch die Stege 6 gebildeten Führung entnehmbar ist.

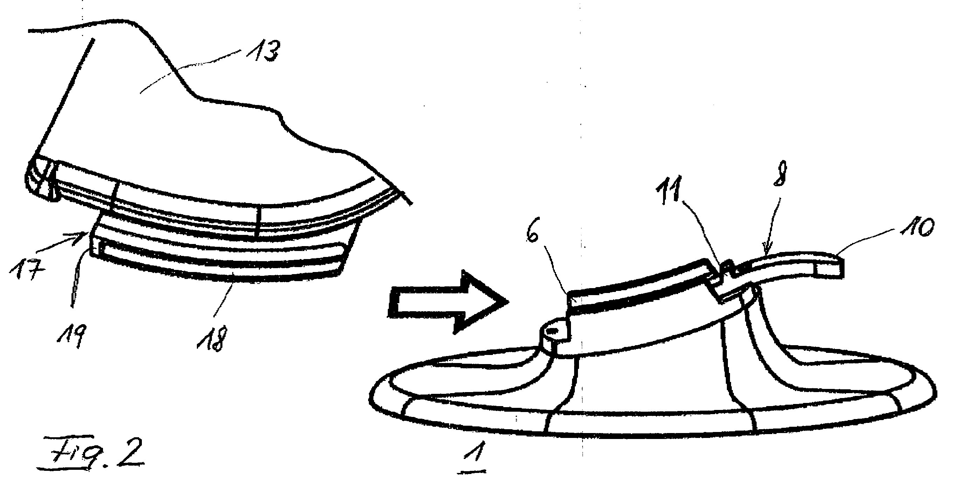

Die Stege 6 und der Boden 7 des Bauteils 4 sind als Kreisbogenabschnitt nach oben gekrümmt und wirken mit einem entsprechenden, kreisbogenabschnittförmig geformten Ansatz 17 an der Unterseite des Gehäuses 13 zusammen, wie Figur 2 verdeutlicht. An dem Ansatz 17 ist eine zur Seite hin offene Nut 18 ausgebildet, in die der zugehörige Steg 6 des Fußteils eingreifen kann, um in der Nut 18 auf dem Kreisbogenabschnitt verschoben zu werden. Die Nut 18 ist zur Vorderseite des Gehäuses 13 hin durch eine Stirnwand 19 verschlossen, sodass die Schwenkbewegung des Gehäuses 13 mit der Unterseite nach hinten begrenzt ist und die Entnahme des Navigationsgeräts 12 vom Fußteil nur durch eine Schwenkung des Unterteils des Gehäuses 13 nach vorn möglich ist, wie dies der Pfeil ② in Figur 1 andeutet.

Die Montage des Navigationsgeräts 12 auf dem Fußteil erfolgt durch Aufschieben bzw. Aufdrehen des Ansatzes 17 auf die durch die Stege 6 gebildeten Führung, wie dies durch den Pfeil in Figur 2 verdeutlicht ist.

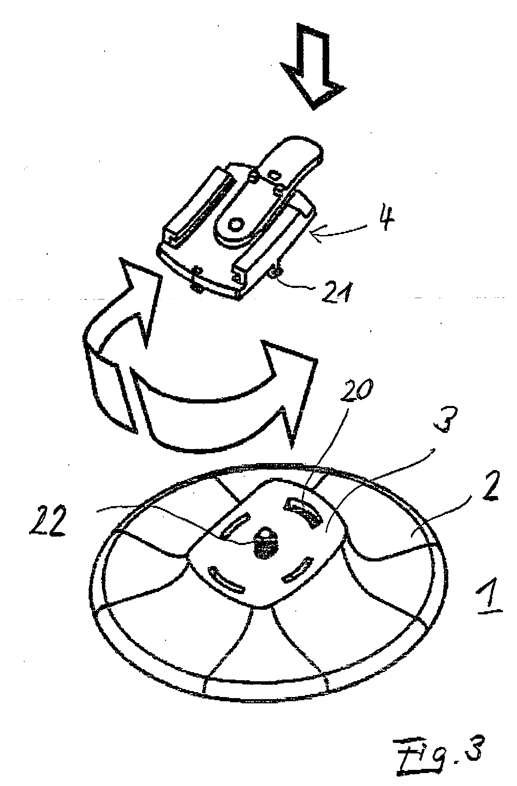

Figur 3 verdeutlicht, dass das Bauteil 4 auf dem Basisteil 2 des Fußteils 1 drehbar gelagert sein kann. Hierzu sind in der Aufnahmefläche 3 vier kreisbogenabschnittförmige Schlitze 20 angeordnet, die von entsprechenden hakenförmigen Ansätzen 21 an der Unterseite des Bauteils 4 untergriffen werden können, die Länge der Schlitze 20 definiert den möglichen Drehwinkel des Navigationsgeräts 12 auf dem Fußteil 1. Die Drehung erfolgt um einen mittigen Bolzen 22, der sich von der Aufnahmefläche 3 mittig nach oben erhebt und in eine entsprechende (nicht dargestellte) Aufnahmeöffnung des Bauteils 4 eingreift. Das erforderliche Einschnappen der hakenförmigen Ansätze 21 in die Schlitze 20 ist dadurch möglich, dass das Material des Basisteils 2 flexibel ist und dadurch den Durchtritt der abgewinkelten Enden der hakenförmigen Ansätze 21 durch den Schlitz ermöglicht.

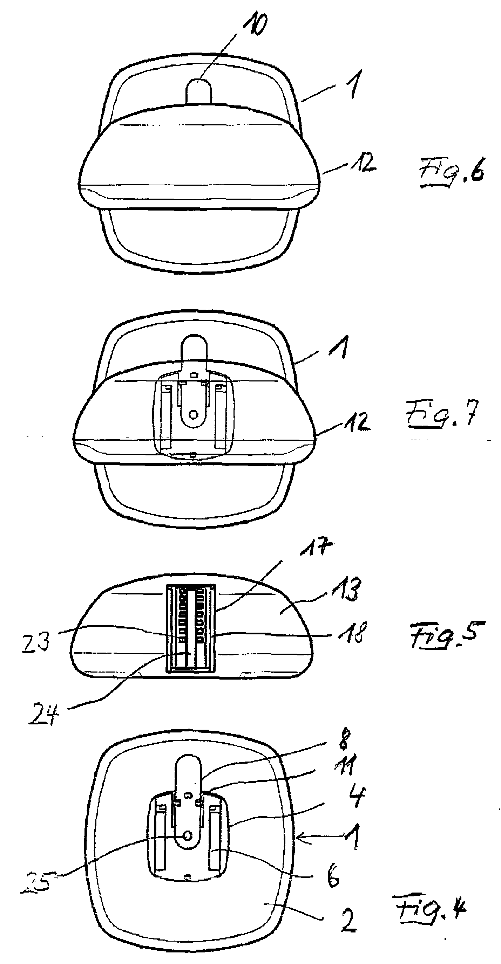

Figur 4 zeigt in einer Draufsicht ein Fußteil 1, das in einer Variante eine im Wesentlichen viereckige Grundfläche mit abgerundeten Seitenkanten aufweist.

Figur 5 zeigt die mit dem Fußteil zusammenwirkende Unterseite des Gehäuses 13, auf der der Ansatz 17 mittig und von vom nach hinten gerichtet angeordnet ist. In dem Ansatz 17 sind die seitlich offenen Nuten 18 ausgebildet in die die seitlich nach innen abgewinkelten Stege 6 eingreifen können. Mittig zwischen den Nuten 18 befindet sich jeweils paarweise angeordnete Ausnehmungen 23, wobei in Längsrichtung des Ansatzes 17 mehrere Paare der Ausnehmungen 23 angeordnet sind. Die Ausnehmungen 23 weisen eine Größe und einen Abstand zueinander auf, dass sie die Vorsprünge 11 des Federelements 8 aufnehmen können. Es ist erkennbar, dass die Winkelstellung des Gehäuses 13 relativ zum Fußteil 1 dadurch veränderbar ist, dass die Vorsprünge 11 in andere Ausnehmungen 23 eingreifen.

Zwischen den Ausnehmungen 23 kann der Absatz 17 eine sich über die Länge erstreckende mittige Kontaktbahn 24 aufweisen, auf der ein federnder Kontaktstift 25, der durch den Bolzen 22 gebildet oder in dem Bolzen 22 geführt sein kann, anliegt, wenn das Gehäuse 13 über die Führungselemente auf dem Fußteil 1 montiert ist, wobei unabhängig von der eingestellten Winkelstellung der Kontakt zwischen dem Kontaktstift 25 und der Kontaktbahn 24 erhalten bleibt. Diese Anordnung ist von Bedeutung, wenn in das Basisteil 2 des Fußteils 1 eine (nicht dargestellte) TMC-Antenne, beispielsweise in Form eines zu einer flächigen Spirale gewickelten Drahtes eingelassen ist, beispielsweise eingespritzt ist.

Figur 6 verdeutlicht die Draufsicht auf das Navigationsgerät 12, das auf dem Fußteil 1 montiert ist. Es ist erkennbar, dass nur das hintere Ende 10 des Federelements 8 über die Kontur des Navigationsgeräts 12 hinausragt, um eine Entarretierung der Vorsprünge 11 aus den Ausnehmungen 23 zu ermöglichen, wodurch das Navigationsgerät 12 vom Fußteil 1 entnehmbar ist.

Figur 7 zeigt die Draufsicht gemäß Figur 6 mit der bereits aus Figur 4 ersichtlichen Anordnung des Fußteils 1 zur Führung und Arretierung des Navigationsgeräts 12.

Es ist erkennbar, dass das Fußteil 1 außerordentlich einfach und preiswert ausgebildet ist. Dies ermöglicht eine vorteilhafte Verwendung der Navigationseinrichtung dadurch, dass zu einem Navigationsgerät 12 mehrere Fußteile 1 in Benutzung genommen werden, die in mehreren Fahrzeugen oder an anderen Stellen montiert werden. Der Benutzer des Navigationsgeräts 12 ist dann in der Lage, das Navigationsgerät 12 mit sich zu führen und unkompliziert und schnell in einem von mehreren Kraftfahrzeugen, an seinem Arbeitsplatz o. dgl. an einem dort vorhandenen Fußteil 1 zu befestigen. Für diese Anwendung ist es besonders sinnvoll, dass das Navigationsgerät 12 unabhängig von dem Fußteil 1 funktionsfähig ist, also eine eigene Satelliten-Empfangsantenne, und ggf. einen eigenen Lautsprecher aufweist. Das Navigationsgerät 12 kann dabei auch als Mobiltelefon ausgebildet sein, das mit einer eigenen SIM-Karte, mit einer Zweitkarte eines anderen Mobiltelefons oder mit Zugangsdaten arbeitet, die über eine drahtlose Datenübertragungseinrichtung (z.B. nach dem Bluetooth-Standard) auf das Navigationsgerät (Mobiltelefon) übertragen worden sind. In diesem Fall muss das Navigationsgerät/Mobiltelefon mit einer entsprechenden drahtlosen Sende-/Empfangseinrichtung ausgestattet und dafür eingerichtet sein, die Zugangsdaten (insbesondere nach dem rSAP-Standard) zu empfangen.

Das Navigationsgerät 12 kann so ausgebildet sein, dass es TMC-Signale über aktuelle Verkehrsstörungen nicht bearbeitet. Wenn das Navigationsgerät 12 jedoch zur Verarbeitung derartiger TMC-Signale eingerichtet ist, kann das Navigationsgerät 12 selbst mit einer TMC-Antenne ausgestattet sein. Vorzugsweise ist jedoch die TMC-Antenne, wie beschrieben, in dem Fußteil 1 angeordnet, sodass die TMC-Signale über den Kontaktstift 25 und die Kontaktbahn 24 in das Navigationsgerät 12 gelangen und dort zur Anzeige gebracht und ggf. zur Routenberechnung berücksichtigt werden können.

## Patentansprüche

1. Navigationseinrichtung mit einem Navigationsgerät (12) zur Auswertung von Satelliten-Navigationsdaten, Eingabe eines Navigationsziels und Ausgabe einer Route zum Navigationsziel, mit einem ein Display (14) aufweisenden Gehäuse (13), das auf einem Fußteil (1) lösbar befestigbar ist, **dadurch gekennzeichnet, dass** das Fußteil (1) ein Basisteil (2) aufweist, auf dessen Oberseite ein einen Kreisbogenabschnitt bildendes erstes Führungselement (6) zur Aufnahme eines entsprechenden kreisbogenförmigen zweiten Führungselements (18) des Gehäuses (13) angeordnet ist und dass das Gehäuse (13) in der durch die Führungselemente gebildeten Führung in mehreren Winkelstellungen mit einer Rastanordnung federnd verrastbar ist.

2. Navigationseinrichtung nach Anspruch 1, **dadurch gekennzeichnet, dass** das Material des Basisteils (2) flexibel ist.

3. Navigationseinrichtung nach Anspruch 1 oder 2, **dadurch gekennzeichnet, dass** die Führungselemente durch paarweise in seitlich offene Nuten (18) eingreifende Stege (6) gebildet sind.

4. Navigationseinrichtung nach Anspruch 3, **dadurch gekennzeichnet, dass** ein Federelement (8) zwischen zwei Nuten (18) oder zwei Stegen (6) angeordnet ist, an dem sich Vorsprünge (11) befinden, die zur Verrastung in mehrere entsprechende Ausnehmungen (23) eingreifen können.

5. Navigationseinrichtung nach Anspruch 4, **dadurch gekennzeichnet, dass** das Federelement (8) mittels eines abstehenden Endes (10) in eine Entarretierungsrichtung bewegbar ist.

6. Navigationseinrichtung nach Anspruch 4 oder 5, **dadurch gekennzeichnet, dass** das Federelement (8) an dem Fußteil (1) und die Ausnehmungen (23) an dem Gehäuse (13) angebracht sind.

7. Navigationseinrichtung nach einem der Ansprüche 1 bis 6, **dadurch gekennzeichnet, dass** das Navigationsgerät (12) autark vom Fußteil (1) verwendbar ausgebildet it.

8. Navigationseinrichtung nach einem der Ansprüche 1 bis 7, **dadurch gekennzeichnet, dass** das erste Führungselement (6) mit dem zugehörigen Teil der Rastanordnung drehbar im Fußteil (1) gelagert ist.

9. Navigationseinrichtung nach Anspruch 8, **dadurch gekennzeichnet, dass** das erste Führungselement (6) auf einem separaten Bauteil (4) ausgebildet ist, das drehbar in dem Basisteil (2) des Fußteils (1) gelagert ist.

10. Navigationseinrichtung nach einem der Ansprüche 1 bis 9, **dadurch gekennzeichnet, dass** das Basisteil (2) tellerförmig ausgebildet ist.

11. Navigationseinrichtung nach einem der Ansprüche 1 bis 10, **dadurch gekennzeichnet, dass** die Unterseite des Basisteils (2) als Klebfläche ausgebildet ist.

12. Navigationseinrichtung nach einem der Ansprüche 1 bis 10, **dadurch gekennzeichnet, dass** die Unterseite des Basisteils (2) mit einem Teil einer Klettverbindung versehen ist.

13. Navigationseinrichtung nach einem der Ansprüche 1 bis 12, **dadurch gekennzeichnet, dass** das Fußteil (1) keine elektrisch wirkenden Elemente enthält.

14. Navigationseinrichtung nach einem der Ansprüche 1 bis 12, **dadurch gekennzeichnet, dass** das Fußteil (1) eine eingearbeitete TMC-Antenne aufweist und dass eine leitende Verbindung von der TMC-Antenne zu dem Navigationsgerät (12) über einen auf einer Kontaktbahn (24) geführten Schleifkontakt (25) erfolgt.

15. Navigationseinrichtung nach einem der Ansprüche 1 bis 14, bestehend aus mehreren Fußteilen (1), auf die das Navigationsgerät (12) aufsetzbar ist.
